Europäisches Patentamt

European Patent Office

Office européen des brevets

(11) Publication number: 0 346 723
A1

## (12) EUROPEAN PATENT APPLICATION

(21) Application number: 89110170.1

(22) Date of filing: 05.06.89

(51) Int. Cl.⁴: C03C 25/02 , G02B 6/16 , C03B 37/02 , C03B 37/10

(30) Priority: 14.06.88 US 206281

(43) Date of publication of application: 20.12.89 Bulletin 89/51

(84) Designated Contracting States: DE FR GB

(71) Applicant: THE BOEING COMPANY
7755 East Marginal Way South
Seattle Washington 98124(US)

(72) Inventor: Pinson, George T.
12010 Queens Pl., S.E.
Huntsville Alabama 35803(US)

(74) Representative: Baillie, Iain Cameron et al
c/o Ladas & Parry Isartorplatz 5
D-8000 München 2(DE)

(54) Method and apparatus for manufacturing coated optical fiber having shaped cross-section.

(57) A clad optical fiber having a non-circular section is provided by apparatus which continuously extrudes a flowable jacketing material around a circular fiber preform and then draws the jacketed fiber through a circular sizing die to provide the desired cross-sectional shape. A minicomputer with inputs from a winding bobbin position sensor and pressure transducer not only controls feeding of the circular fiber preform and the flow of jacketing material to the extruder, but also the supply of inert gas to the apparatus. A particularly favorable clad fiber cross-sectional shape includes tangentially alternating circular segments and radially extending "flaps" positioned to fall in the interstices formed when the fiber is wound on a bobbin with abutting and overlapping turns.

FIG. 6A.

FIG. 6E.

## METHOD AND APPARATUS FOR MANUFACTURING COATED OPTICAL FIBER HAVING SHAPED CROSS-SECTION

### Field and Background of the Invention

This invention relates to a method of manufacturing coated optical fiber and, in particular, to a method for manufacturing coated optical fiber having a shaped, non-circular cross-section.

A number of weapon systems and communication systems have been developed and others are under development that use an optical fiber to provide a two-way data link between one or more moving vehicles or one moving vehicle and a stationary ground system. The optical fiber is wound onto a reel or bobbin. The bobbin is attached to each of the moving vehicles and the fiber is stripped from the bobbin much as a fishing line is stripped from a spinning reel. See, for example, the apparatus disclosed in copending application no. 89105896.8 filed 4 April, 1989. The successful dispensing or unwinding of the optical fiber from a moving vehicle requires that the fiber be placed on the bobbin in such a manner that the optical signal losses through the wound fiber fall within acceptable limits and the fiber can be rapidly unwound without knotting, clumping, or slumping.

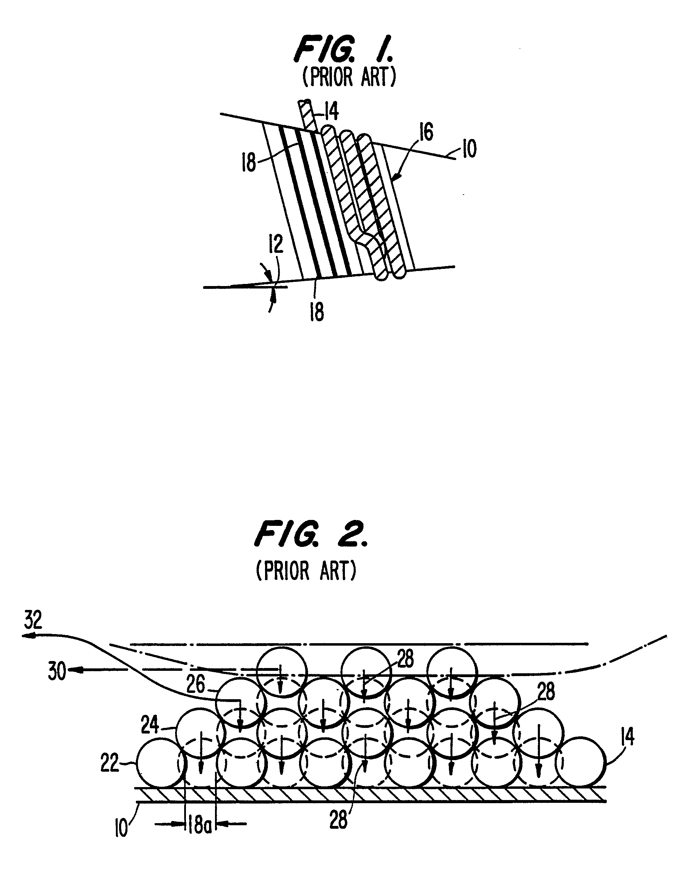

Figure 1 shows a typical bobbin 10 as a section of a cone. Cone angle 12 is exaggerated for illustration purposes. The optical fiber 14 is first wound onto the bobbin in either a right or left hand spiral. The first layer 16 may be firmly attached to the bobbin by the use of an adhesive. An axial gap may or may not be placed between each of the succeeding turns of fiber. However, in prior art constructions involving fiber with circular cross-sectional shapes, grooves such as groves 18 shown in Fig. 1 are formed between axially adjacent fiber turns on the bobbin. These grooves are formed even if the adjacent turns are abutting.

As first layer 16 (Figure 1) is completed, second layer 20 of fiber must be wound on the bobbin. This requires that second layer 20 be wound "against the grain," that is, in a direction counter to the winding direction of first layer 16. Since the second layer 20 is wound in the opposite direction to the first layer 16, the second layer must periodically "cross over" from one groove to the next. Since the optical fibers generally are very small in diameter, the accuracy of the machine needed to perform the crossovers must have a tolerance of better than ±0.001 inches which is difficult and very expensive to achieve in a mechanical system. Failure to place the fiber in the groove may result in knotting or clumping during the removal of the fiber.

A major improvement to the pattern of winding shown in Figure 1 is described in copending application no. 89105896.8 filed 4 April, 1989. The improved winding pattern lessens, but does not eliminate, the problem of "slumping". Slumping occurs because of the radially inward forces acting on the fibers as a result of thermal, shock and vibration stresses. The problem is illustrated in Figure 2.

As mentioned previously, when round fibers 14 are wound onto bobbin 10, the shape of the fiber is such that grooves between the fibers inherently exist. If the winding pattern deliberately includes spaces between adjacent turns, then the grooves become enlarged. These enlarged grooves are depicted as 18a in Figure 2. In addition, the mechanics of the winding process may further enlarge the grooves such that there are separations between the turns of fiber. When two or more layers, e.g., layers 22, 24, and 26 in Figure 2, of fiber are placed over each other, an upper layer of fiber is wound to fit within the separation between the turns of fiber on the next lower layer. This process is repeated until bobbin 10 is filled.

If radially inward forces such as forces 28 are applied to the fiber turns, as in the case where the optical fiber and the bobbin have different coefficients of thermal expansion and the bobbin is in an expansion mode, the turns in the upper layer 26 tend to be forced into grooves 18a in the lower layer 24. Fiber 14 generally is very strong and the forces can increase considerably inside the wound bobbin. If the forces become high enough, that is, high enough to overcome the frictional forces, relief will occur by strands from an upper layer forcing themselves between the turns of fiber on a lower row. When this occurs, slumping occurs and the forces are relieved. When the fiber is payed out, such as in axial direction 30, the strands that are forced in between the turns of a lower layer are pinched. If the payout forces are less than the strength of the fiber, a tangle of fiber 32 is pulled off of the bobbin. Otherwise, the fiber breaks. Note that the "frictional forces" as used herein is a collective term for all of the forces that act to keep a row of fiber turns in place. These may be caused by the shape of the bobbin, winding tension, adhesives, etc.

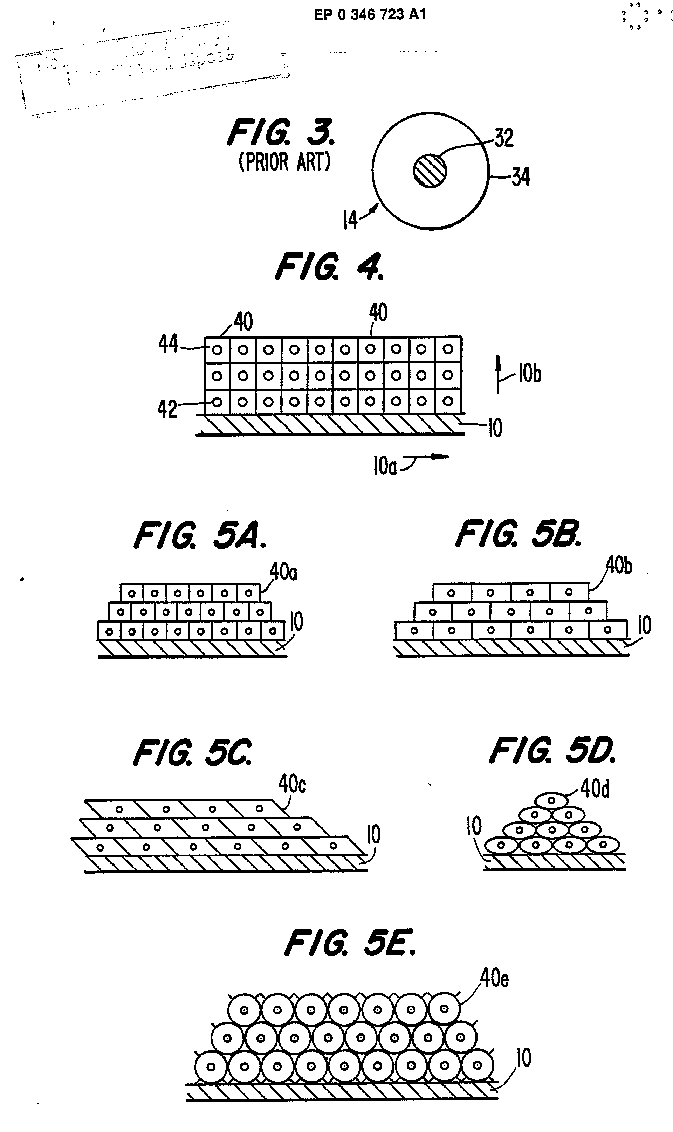

It is economical to produce a wire or optical fiber with a circular cross-section. A typical conventional optical fiber 14, see Figure 3, is made up of a light-transmitting core 32 and a cladding or "jacket" 34. Optical fibers having non-circular cross-sections are known, for instance, by U.S. 2,825,260 (O'Brien) and U.S. 3,196,738 (Hicks, Jr.).

These generally have a non-circular core and a cladding shape similar to the core shape. U.S. 4,515,436 (Howard et al.) discloses an optical fiber having multiple circular cores with a non-circular (elliptical) cladding. U.S. 3,193,363 (Hicks, Jr. et al.) and U.S. 3,666,587 (Nagao) disclose methods and apparatus that can be used to form optical fibers with non-circular cross-sections.

Optical fibers having non-circular cross-sections theoretically should be able to further minimize slumping with a bobbin as disclosed in Figure 1 because the cross-sectional shapes can be selected to minimize or eliminate entirely the grooves between adjacent fiber turns. However, current methods and apparatus used to form optical fibers with non-circular cross-sections can be inefficient, uneconomical and/or fail to produce a fiber within desired tolerances.

Summary of the Invention

The present invention preferably provides a method and apparatus for economically and efficiently producing optical fiber of high quality and close tolerances. Preferably, the present invention provides optical fiber of particular non-circular cross-sectional shapes for use in winding bobbins without "slumping".

In accordance with one aspect of the present invention there is provided a method of fabricating a shaped, clad optical fiber which comprises the steps of providing an optical fiber core having a circular cross-section, coating the fiber core with a jacket of flowable cladding material, drawing the coated fiber through a non-circular orifice of a shaping die to provide the jacket with a predetermined non-circular cross-sectional shape while maintaining the circular cross-section of the optical fiber core, and curing the shaped jacket.

In accordance with another aspect of the present invention, there is provided apparatus for fabricating a clad optical fiber having a non-circular cladding which comprises means for fabricating an optical fiber core having a circular cross-section, means for conveying the optical fiber core in a downstream direction, means for coating the optical fiber core with a jacket of flowable cladding material, and a cladding die positioned downstream from the coating means, the cladding die having at least one non-circular orifice through which the coated fiber core passes, the orifice providing the jacket with a non-circular cross-sectional shape while maintaining the circular cross-section of the optical fiber core, and means for curing the cladding material after the coated fiber core passes through the orifice.

Preferably, the conveying means includes a bobbin positioned downstream of the curing means, and means for rotating the bobbin about an axis, the coated fiber core being wound around the bobbin. The conveying means may further include control means operatively connected to the bobbin drive means for controlling rotation of the bobbin to exert a preselected conveying tension on the clad fiber. The optical fiber core fabricating means conveniently includes an optical fiber preform and a cooperating preform heater. The conveying means may also include a bobbin rotational position sensor and optical fiber core feed means both operatively connected to the control means for, in conjunction with the bobbin rotating means, providing accurate positioning of the preform in the heater.

It is further preferred that the optical fiber core fabricating means includes an optical fiber preform, shaping die means for reducing the preform to near-net shape, and sizing die means for further reducing the preform to net shape. Preferably, the fabricating means further includes means for surrounding the preform, the shaping die means, and the sizing die means with a low pressure, inert gas to minimize fiber core contamination.

The apparatus may also include a substantially gas-tight fiber core forming chamber surrounding the preform, the shaping die means, and the sizing die means. Also conveniently included in the apparatus are an inert gas supply, conduit means including a supply valve interconnecting the gas supply and the chamber, and a pressure transducer mounted in the chamber. The control means is operatively connected to the transducer and the supply valve for controlling the valve in response to the pressure sensed by the transducer.

It is also preferred that the cladding coating means includes a source of cladding material, extruder means engaging the optical fiber being conveyed, and cladding material supply means interconnecting the cladding material source and the extruder means. The control means may be operatively connected to the supply means for controlling the supply of cladding material from the source to the extruder based on the rate of conveyance of the finished clad optical fiber.

In accordance with yet a further aspect of the present invention, there is provided an optical fiber for winding on an axially tapered bobbin from which the fiber will be deployed via free-streaming in the axial direction comprising an axially continuous core portion having a substantially circular cross-section, and an axially continuous cladding portion surrounding the core portion, the cladding portion having a non-circular cross-section with a plurality of alternating circular segments and radially extending flap segments, the flap segments being positioned tangentially to extend into the interstices formed by abutting turns of the optical fiber. Preferably, the optical fiber further comprises an axially continuous reinforcing member in at least one of the flap segments.

The invention resides in the novel parts, constructions, steps, arrangements, combinations and improvements shown and described. The accompanying drawings, which are incorporated in and constitute a part of this specification, illustrate the presently preferred embodiments of the invention, and, together with the description, serve to explain the principles of the invention.

Brief Description of the Drawings

Fig. 1 is a schematic representation of a prior art optical fiber not made in accordance with the present invention, wound about a tapered bobbin;

Fig. 2 is a schematic longitudinal cross-section of the wound bobbin in Fig. 1;

Fig. 3 is a schematic axial cross-section of a conventional coated optical fiber;

Fig. 4. is a schematic longitudinal cross-section of a bobbin wound with coated optical fiber made in accordance with the present invention;

Figs. 5A-5E are schematic longitudinal cross-sections of bobbins wound with coated optical fibers made in accordance with the present invention and having coatings with different geometric shapes.

Figs. 6A-6E are schematic axial cross-sections of the coated optical fibers in Figs. 5A-5E, respectively;

Fig. 7 is a schematic cross-section of apparatus for making coated optical fiber having a non-circular, shaped cross-section, in accordance with the present invention;

Fig. 8 is a detailed view of the cladding die component of the apparatus depicted in Fig. 7; and

Fig. 9 is an enlarged detail of the wound bobbin shown in Fig. 5E.

Reference now will be made to the present preferred embodiments of the invention, examples of which are shown in the above-mentioned drawings.

Description of the Preferred Embodiments

The present invention relates in part to the use of optical fibers having non-circular outer cross-sections on axially tapered bobbins from which fiber removal or deployment will occur along the axial direction, generally in the direction of the taper. This use is depicted schematically in Figure 4 which shows a sectional part of tapered bobbin 10 (taper not shown for clarity) having an axial direction 10a and a radial direction 10b. Bobbin 10 can be conventional but has multiple, radially adjacent layers of axially adjacent turns of optical fiber 40 (only three layers being shown for clarity) which is shown with a square overall cross-section representative of a non-circular shape.

In Figure 4, optical fiber 40 includes a circular core portion 42 and an extruded fiber cladding or "jacket" 44. The overall fiber, instead of being round as in the conventional form, is square. Since the cladding is extruded, the square cladding can be achieved simply by use of a square shaped extrusion die.

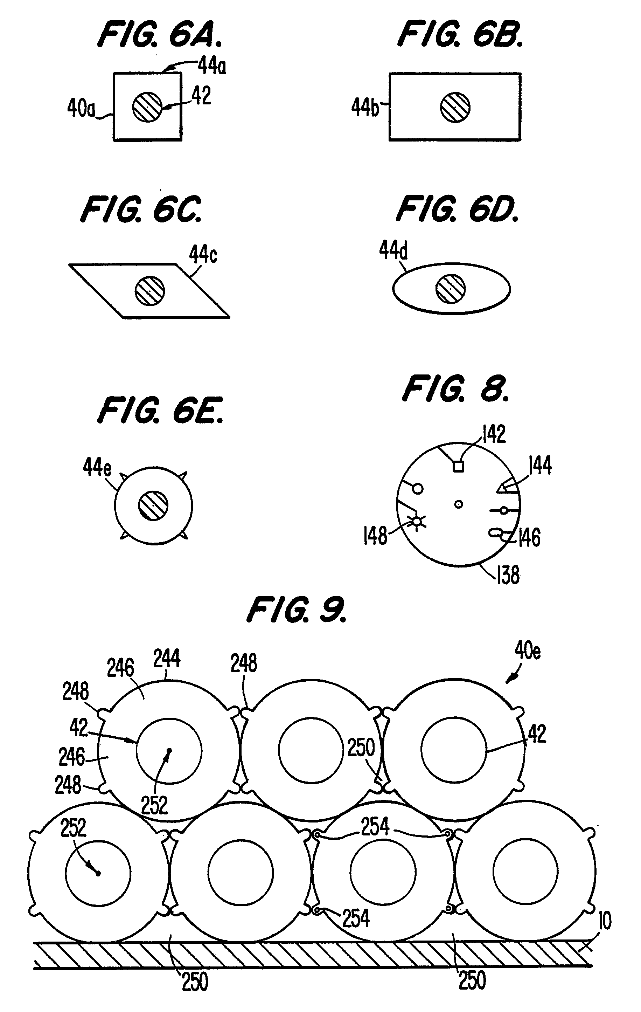

Optical fiber 40 can be placed on the bobbin 10 in the conventional manner using a winding machine. The advantage of the square cross-section of the fiber cladding results from the total lack of interstices between axially adjacent turns of fiber 40. Although Figure 4 shows the fiber turns of adjacent layers in radial alignment, overlap such as in a "brick work" sequence may produce a stronger wound bobbin. See Figure 5A. Also, other non-circular cladding cross-sections can be used. Figures 6A-6D show, respectively, square, rectangular, trapezoidal and elliptical shapes. Figure 6E shows fiber 40e with a complex "flap" shape which will be discussed in more detail hereinafter. Figures 5B-5E show that an overlap type of winding is possible with cladding shapes other than square. The overlaps permit the respective fibers 40a....40e to be removed parallel to the axis 10a of bobbin 10 without significant interference.

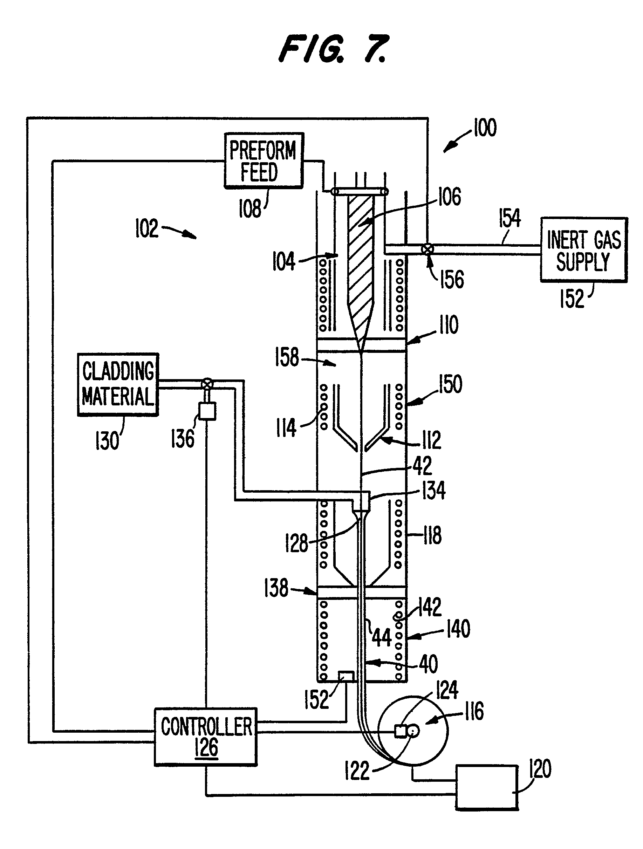

In accordance with the present invention, the apparatus for fabricating a clad optical fiber having a non-circular cladding includes means for fabricating an optical fiber core having a circular cross-section. As embodied herein, and with specific reference to Figure 7, the apparatus designated generally by the numeral 100 includes a core-forming segment 102 that includes an induction furnace/heater 104 surrounding preform 106 of optically transparent material to be used for the core portion of the clad optical fiber. Preform 106 is mounted on a feed mechanism 108 which is controlled in accordance with the present invention as will be described hereinafter. The orientation of the circular core-forming portion 102 is shown as vertical in the Figure, being the preferred orientation. The circular core-forming portion further includes shaping die 110 for providing a near-net shape for the circular core portion 42 and an additional sizing die 112 for providing the final dimension and shape of core 42. As is shown in Figure 7, sizing die 112 can preferably include induction heater 114 to control the temperature and thus the consistency of the drawn optical fiber core.

Further in accordance with the present invention, the apparatus for fabricating a clad optical fiber includes means for conveying the optical fiber core in a downstream direction. As embodied herein, the conveying means includes storage bobbin 116 positioned downstream of both the core-forming portion 102 of apparatus 100 and the portion 118 of apparatus 100 wherein the jacket is applied to the core 42, as will be described hereinafter. The conveying means further includes a bobbin drive 120 shown schematically in Figure 7, which drive causes storage bobbin 116 to both rotate and translate along bobbin axis 122 (perpendicular to paper), thereby causing the clad optical fiber 40 to be stored in a symmetrical wound configuration on bobbin 116. Preferably, apparatus 100 also includes control means operatively connected to the bobbin drive 120 for controlling rotation of bobbin 116 to exert a preselected conveying tension on clad fiber 40. Position sensor 124 can be used to sense the rotational orientation of bobbin 116 and provide an appropriate position signal to process controller 126. Controller 126 also is operatively connected to preform feed 108 for accurate positioning of preform 106 within induction heater 104.

Further in accordance with the present invention, means are provided for coating the optical fiber core with a jacket of flowable cladding material. As embodied herein, and with continued reference to Figure 7, a cladding section 118 of apparatus 100 is provided wherein a flowable cladding material 128 is caused to be applied to optical fiber core 42 as it passes through apparatus 100. The coating means includes a source 130 of the flowable cladding material 128 a cladding material extruder 134 located in section 118 of apparatus 100 and conduit 132 interconnecting source 130 and extruder 134. Cladding material drive 136 causes cladding material to be fed through conduit 132. Preferably and as depicted in Figure 7, controller 126 is operatively connected to cladding material supply drive 136 for controlling the rate of supply of cladding material 128 based on the through-put of clad optical fiber 40 as measured by the position sensor 124.

Still further in accordance with the present invention, the apparatus for fabricating a clad optical fiber having a non-circular cladding die positioned downstream from the coating means, wherein the cladding die has at least one non-circular orifice through which the coated fiber passes. The orifice provides the jacket or cladding with a non-circular cross-sectional shape while maintaining the circular cross-section of the optical fiber core.

As embodied herein, and with continued reference to Figure 7, cladding die 138 is positioned in apparatus 100 downstream from extruder 134. The cladding 44 surrounding circular core 42 after extrusion from extruder 134 is both sized and configured to provide a desired non-circular cross-sectional shape of the finished fiber 40. Thereafter, the clad fiber 40 passes through curing station 140 which can include induction heaters 142, after which the coated fiber 40 passes out of cladding section 118 and is wound around storage bobbin 116.

Preferably, cladding dies 138 can be of the rotating type such as shown in Figure 8, wherein a plurality of different cross-sectional shapes can be rotatably indexed into position depending on the particular application. As is shown in Figure 8, various cross-sectional shapes can be included on a single rotating die fixture 138, including a substantially square orifice 142, triangular orifice 144, elliptical orifice 146, and a "star" shaped orifice having a plurality of alternating circular segments and radial extension segments such as shown in orifice 148.

Preferably, the apparatus further includes means for surrounding the optical fiber preform, the shaping die means, and the sizing die means with a low pressure, inert gas to minimize fiber core contamination during the processing. As embodied herein, both circular core forming section 102 and the cladding section 118 of apparatus 100 are enclosed within a substantially gas tight housing 150. An inert gas supply 152 is connected to housing 150 through conduit 154 which is controlled by supply valve 156. This provides a low pressure atmosphere 158 of inert gas surrounding the optical material preform 106, the shaping die 110 and sizing die 112, which, together, yield a shaped and sized circular fiber 42. Inert atmosphere 158 also surrounds cladding extruder 134, cladding die 138 and curing station 140. It is also preferred that chamber 150 include pressure transducer 152 which can be operatively connected to controller 126. In turn, controller 126 can be operatively connected to inert gas supply valve 156 for maintaining a preselected pressure of inert gas within chamber 150 of apparatus 100. As one skilled in the art would appreciate, given the present disclosure, variations and modifications of the above apparatus are possible while staying within the scope and spirit of the present invention.

Figure 9 shows an expanded cross-sectional representation of a clad optical fiber having a particular non-circular cross-section that can be advantageously provided by the previously described apparatus. In accordance with another aspect of the present invention, the optical fiber includes an axially continuous core portion having a substantially circular cross section together with an axially continuous cladding portion surrounding the core portion and having a non-circular cross-section comprising a plurality of alternating circular segments and radially extending flap segments. The flap segments are positioned tangentially to extend into the interstices formed by abutting terms of the optical fiber when wound about a bobbin.

As embodied herein and as shown in Figure 9, which is an expanded representation of the clad optical fiber 40e shown in Figure 6E, clad fiber 40e includes circular core portion 42 as discussed in relation to previous embodiments and a novel cladding portion 244 which includes tangentially alternating circular segments 246 and radially extending "flap" segments 128. When arrayed on a bobbin, such as bobbin 10 shown schematically in Figure 9, the flap segments 248 of cladding 244 will extend into the interstices 250 formed between abutting turns of clad optical fibers 40e. In the particular embodiment shown in Figure 9, optical fiber 40e includes a cladding 24 which contains four flap segments 248 on each of fibers 40e running parallel to the fiber. The flaps are generally at an angle between about 30 degrees to 40 degrees off of the horizontal axis, namely axis 252 as depicted in the Figure. This angle may be varied to meet special requirements and different angles may be used on the same fiber. Flap segments 248 may be of any convenient shape or design to fill most of the space in interstices 250 and thereby to resist slump. It is also preferred to introduce a strand such as strand 254 inside one or more of flap segments 248 to further reinforce or strengthen the clad optical fiber. A suitable material for strand 254 is Kelvar.

It would be apparent to those skilled in the art that various modifications and variations could be made to the method and apparatus of the present invention, and also in the disclosed clad fiber products, without departing from the scope or spirit of the invention.

**Claims**

1. A method of fabricating a shaped, clad optical fiber, comprising the steps of:
providing an optical fiber core having a circular cross-section;
coating said fiber core with a jacket of flowable cladding material;
drawing said coated fiber through a non-circular orifice of a shaping die to provide said jacket with a predetermined non-circular cross-sectional shape while maintaining the circular cross-section of said optical fiber core; and
curing said shaped jacket.

2. The method of claim 1, wherein said drawing step includes providing the shaped jacket with a rectangular cross-section.

3. The method of claim 1, wherein said drawing step includes providing the shaped jacket with a square cross-section.

4. The method of claim 1, wherein said drawing step includes providing the shaped jacket with an elliptical cross-section.

5. The method of claim 1, wherein said drawing step includes simultaneously forming at least one radially projecting flap portion, the orifice having a substantially circular edge with at least one flap-forming portion extending radially beyond the substantially circular edge, the shaped jacket being substantially circular in cross-section with except for the one radially projecting flap portion.

6. The method of claim 1, wherein said optical fiber core providing step includes the sub-steps of:
providing a glass preform;
heating said glass preform to a molten state; and
extruding said molten preform through a circular sizing die.

7. The method of claim 1, wherein said coating step includes passing the fiber core through a reservoir of cladding material heated to a molten state.

8. The method of claim 1, wherein the method includes a final step of winding the clad fiber core onto a bobbin, and wherein said winding step includes rotating the bobbin and indexing the bobbin in the axial direction as the bobbin rotates.

9. Apparatus for fabricating a clad optical fiber having a non-circular cladding, comprising:
means for fabricating an optical fiber core having a circular cross-section;
means for conveying the optical fiber core in a downstream direction;
means for coating the optical fiber core with a jacket of flowable cladding material;
a cladding die positioned downstream from said coating means, said cladding die having at least one non-circular orifice through which the coated fiber core passes, said orifice providing the jacket with a non-circular cross-sectional shape while maintaining the circular cross-section of the optical fiber core; and
means for curing the cladding material after the coated fiber core passes through said orifice.

10. The apparatus of claim 9, wherein said conveying means includes a bobbin positioned downstream of said curing means, and means for rotating said bobbin about an axis, said coated fiber core being wound around said bobbin.

11. The apparatus of claim 10, wherein said conveying means further includes control means operatively connected to said bobbin drive means for controlling rotation of said bobbin to exert a preselected conveying tension on the clad fiber.

12. The apparatus of claim 11, wherein said control means indexes said bobbin in the axial direction to maintain alignment between the fiber and said orifice while the clad fiber is wound around said bobbin.

13. The apparatus as in claim 11 wherein said optical fiber core fabricating means includes an optical fiber preform and a cooperating preform heater, and wherein said conveying means also includes a bobbin rotational position sensor and optical fiber core feed means both operatively connected to said control means for, in conjunction with said bobbin rotating means, providing accurate positioning of said preform in said heater.

14. The apparatus as in claim 9 wherein said optical fiber core fabricating means includes an optical fiber preform, shaping die means for reducing said preform to near-net shape, and sizing die means for further reducing said preform to net shape, said fabricating means further including means for surrounding said preform, said shaping die means, and said sizing die means with a low pressure, inert gas to minimize fiber core contamination.

15. The apparatus as in claim 14 including a substantially gas-tight fiber core forming chamber surrounding said preform, said shaping die means, and said sizing die means; and inert gas supply; conduit means including a supply valve interconnecting said gas supply and said chamber; a pressure transducer mounted in said chamber; and control means operatively connected to said transducer and said supply valve for controlling said valve in response to the pressure sense by said transducer.

16. The apparatus as in claim 9 wherein said cladding coating means includes source of cladding material, extruder means engaging said optical fiber being conveyed, cladding material supply means interconnecting said cladding material source and said extruder means, and control means operatively connected to said supply means for controlling the supply of cladding material from said source to said extruder based on the rate of conveyance of said clad optical fiber.

17. The apparatus as in claim 16 wherein said supply means includes a supply drive, and wherein said control means includes a controller and means for sensing rate of through-put of the clad fiber, said sensing means and said supply drive means being operatively connected to said controller.

18. A filled bobbin comprising a bobbin member having an axis and being tapered along said axis, and a plurality of radially adjacent layers of optical fiber wound on said bobbin member, each of said layers comprising a plurality of axially adjacent turns of said optical fiber, said optical fiber having a core portion substantially circular in cross-section and a cladding portion surrounding said core portion and being substantially non-circular in cross-section for resisting radially inward movement of optical fiber turns of a given one of said layers to between the optical fiber turns of the adjacent radially inner fiber layer.

19. An optical fiber for winding on an axially tapered bobbin from which the fiber will be deployed via free-streaming in the axial direction, the fiber comprising:
an axially continuous core portion having a substantially circular cross-section; and
an axially continuous cladding portion surrounding said core portion and having a non-circular cross-section comprising a plurality of alternating circular segments and radially extending flap segments, said flap segments being positioned to extend into the interstices formed by abutting turns of the optical fiber.

20. The optical fiber as in claim 19 further comprising an axially continuous reinforcing member in at least one of said flap segments.

## FIG. 1.
### (PRIOR ART)

## FIG. 2.
### (PRIOR ART)

**FIG. 3.**
(PRIOR ART)

**FIG. 4.**

**FIG. 5A.**

**FIG. 5B.**

**FIG. 5C.**

**FIG. 5D.**

**FIG. 5E.**

## FIG. 6A.

## FIG. 6B.

## FIG. 6C.

## FIG. 6D.

## FIG. 6E.

## FIG. 8.

## FIG. 9.

FIG. 7.

European Patent Office

| | DOCUMENTS CONSIDERED TO BE RELEVANT | | EP 89110170.1 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | GB - A - 2 044 751 (N.V.PHILIPS' GLOEILAMPEN-FABRIEKEN) * Page 3, line 53 - page 4, line 8; fig. * | 1-3,7-11,14,15 | C 03 C 25/02 G 02 B 6/16 C 03 B 37/02 C 03 B 37/10 |
| X | PATENT ABSTRACTS OF JAPAN, unexamined applications, C field, vol. 5, no. 184, November 21, 1981 THE PATENT OFFICE JAPANESE GOVERNMENT page 167 C 80 * Kokai-no. 56-109 832 (FURUKAWA DENKI KOGYO K.K.) * | 6 | |
| X | US - A - 4 631 078 (TOMLINSON et al.) * Column 2, lines 11-35; fig. 1 * | 9-13 | |
| D,A | US - A - 4 515 436 (HOWARD et al.) * Abstract; fig. 3,5; column 4, lines 63-67; column 5, lines 12-17 * | 1 | TECHNICAL FIELDS SEARCHED (Int. Cl.4) C 03 C G 02 B C 03 B |
| A | EP - A1 - 0 173 183 (MITSUBISHI METAL CO.) * Fig. 3; page 3, lines 10-20 * | 1 | |

The present search report has been drawn up for all claims

| Place of search | Date of completion of the search | Examiner |
|---|---|---|
| VIENNA | 28-08-1989 | HAUSWIRTH |